Europäisches Patentamt

European Patent Office

Office européen des brevets

(19)

(11) Veröffentlichungsnummer: **0 116 118**
**B1**

# (12) EUROPÄISCHE PATENTSCHRIFT

(45) Veröffentlichungstag der Patentschrift:
06.12.89

(21) Anmeldenummer: 83110358.5

(22) Anmeldetag: 18.10.83

(51) Int. Cl.⁴: **G 01 D 5/244,** H 03 M 1/00,
**G 01 B 7/02**

(54) **Messeinrichtung.**

(30) Priorität: 11.12.82 DE 3245914

(43) Veröffentlichungstag der Anmeldung:
22.08.84 Patentblatt 84/34

(45) Bekanntmachung des Hinweises auf die Patenterteilung:
06.12.89 Patentblatt 89/49

(84) Benannte Vertragsstaaten:
AT CH DE FR GB IT LI NL SE

(56) Entgegenhaltungen:
EP-A-0 077 423
DE-A-2 540 412
DE-A-3 037 810
FR-A-2 323 983
GB-A-2 065 872

(73) Patentinhaber: Dr. Johannes Heidenhain GmbH,
Nansenstrasse 17, D-8225 Traunreut (DE)

(72) Erfinder: Nelle, Günther, Dr.- Ing., Eichenweg 12,
D-8221 Bergen (DE)

EP 0 116 118 B1

## Beschreibung

Die Erfindung betrifft eine Meßeinrichtung gemäß dem Oberbegriff des Anspruchs 1.

Bei einer derartigen Meßeinrichtung können die an den Referenzmarken erzeugten Steuerimpulse auf verschiedene Weise verwertet werden, z. B. zum Reproduzieren der Nullposition im Zähler, zum Anfahren einer bestimmten Position zu Beginn der Messung und zur Kontrolle von Störimpulsen sowie zur Beaufschlagung einer nachgeschalteten Steuereinrichtung.

Aus der DE-AS 2 540 412 ist eine inkrementale Meßeinrichtung der eingangs genannten Art bekannt, bei der auf einem Maßstab bereits bei der Teilungsherstellung in zueinander festgelegten Abständen eine Reihe von Referenzmarken vorgesehen und mindestens ein Auswahlelement auf dem Maßstab selbst oder in dessen unmittelbarer Nähe in einer Nut verschiebbar angeordnet sind. Mittels der Auswahlelemente können eine oder mehrere Referenzmarken ausgewählt und jeweils in Wirkzusammenhang mit einem Schaltmittel gebracht werden, indem jeder Referenzmarke, die beim Meßvorgang zur Wirkung gelangen soll, ein Magnet zugeordnet ist, der beim Vorbeibewegen einer Abtasteinheit einen darauf angebrachten elektrischen Schalter ansteuert, dessen elektrischer Ausgang zusammen mit dem elektrischen Ausgang der Abtasteinheit an eine elektronische Baueinheit gelegt ist, die an ihrem Ausgang nur dann einen Steuerimpuls abgibt, wenn gleichzeitig am Ausgang der Abtasteinheit und am Ausgang des Schalters ein elektrisches Signal anliegt.

In der DE-PS 3 037 810 ist ebenfalls eine inkrementale Meßeinrichtung mit entlang der Teilung eines Maßstabs vorgesehenen Referenzmarken beschrieben, bei der die Auswahl der Referenzmarken durch eine optoelektronische Einrichtung erfolgt. Das Auswahlelement, beispielsweise in Form einer Lichtquelle, ist zur Zuordnung zu einer ausgewählten Referenzmarke in einer Nut des Maßstabträgerkörpers verschiebbar. Das Licht des Auswahlelements beaufschlagt beim Vorbeibewegen einer Abtasteinheit ein darauf angeordnetes Photoelement, so daß die betreffende Referenzmarke zur Wirkung gelangt. Die Verschiebung des Auswahlelements in der Nut zur Zuordnung zu einer ausgewählten Referenzmarke kann auch mittels Mitnehmer an der Abtasteinheit erfolgen.

Derartige inkrementale Meßeinrichtungen werden beispielsweise bei Bearbeitungsmaschinen zur Messung der Relativlage von Maschinenteilen eingesetzt. Durch die bei solchen Maschinen auftretenden Erschütterungen kann es aber zu Verschiebungen des Auswahlelements in der Nut kommen, so daß die eindeutige Zuordnung des Auswahlelements zur ausgewählten Referenzmarke und ein Wirksamwerden der Referenzmarke nicht mehr gewährleistet sind. Bei dicht benachbarten Referenzmarken kann bei derartigen Verschiebungen des Auswahlelements auch eine falsche Referenzmarke zur Wirkung gelangen, so daß ein falscher Steuervorgang, beispielsweise ein Nullungsvorgang, im Zähler ausgelöst wird, der ein falsches Meßergebnis zur Folge hat. Jedes in Bewegungsrichtung der Abtasteinheit verschiebbare Auswahlelement muß daher bezüglich der jeweils ausgewählten Referenzmarke in einer reproduzierbaren Lage fixierbar sein. Das Auswahlelement in Form eines Magneten zieht außerdem in starkem Maße Metallspäne an, die schwierig zu entfernen sind. Gleichfalls ist das Entfernen von weiteren in Form einer Lichtquelle, eines Spiegels oder eines Prismas Verunreinigungen von den vorliegenden nicht einfach zu bewerkstelligen.

Es ist an sich bekannt, Informationen elektromagnetisch aufzuzeichnen.

Der Erfindung liegt die Aufgabe zugrunde, beiner Meßeinrichtung der eingangs genannten Art eine einfache und störungssichere Auswahl von Referenzmarken zu ermöglichen.

Diese Aufgabe wird erfindungsgemäß durch die kennzeichnenden Merkmale des Anspruchs 1 gelöst.

Die mit der Erfindung erzielten Vorteile bestehen insbesondere darin, daß gesonderte Auswahlelemente, Führungsnuten zum Verschieben der Auswahlelemente sowie Fixierelemente zur eindeutigen Lagezuordnung der Auswahlelemente zu den betreffenden Referenzmarken entfallen können, wodurch sich ein einfacher und preisgünstiger Aufbau einer solchen Meßeinrichtung ergibt. Durch die störungssichere Auswahl der Referenzmarken kann die Betriebssicherheit des Meßsystems und der mit ihr verbundenen Maschine weiter erhöht werden. Verunreinigungen können zudem auf einfache Weise entfernt werden.

Vorteilhafte Weiterbildungen der Erfindung entnimmt man den sprüchen 2 bis 10.

Ausführungsbeispiele der Erfindung werden anhand der Zeichnung näher erläutert.

Es zeigen:

Figur 1    schematisch eine inkrementale Längenmeßeinrichtung

Figur 2    einen Maßstab der Längenmeßeinrichtung und

Figur 3    einen weiteren Maßstab mit Merkmalen der Erfindung.

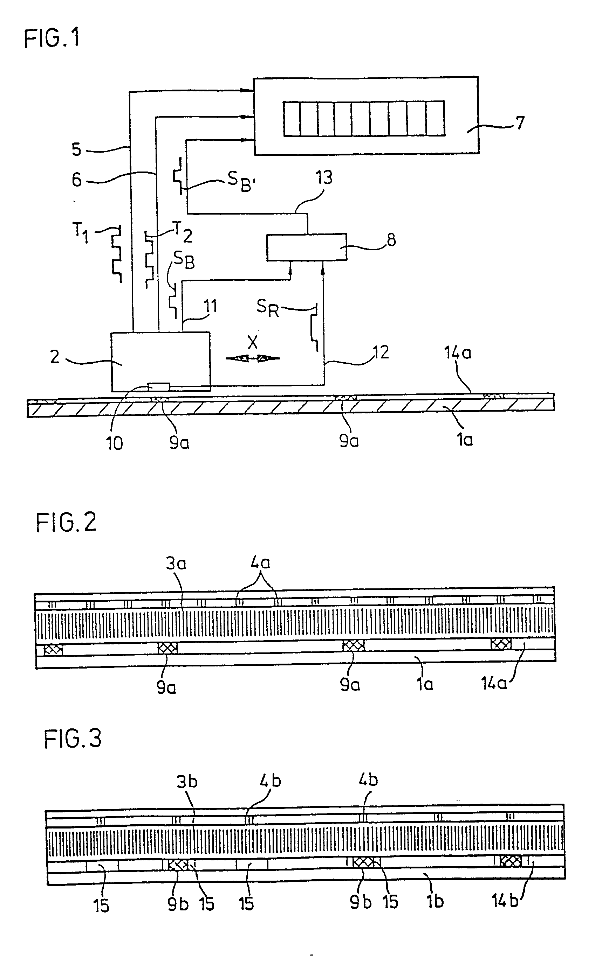

In Figur 1 ist schematisch eine lichtelektrische inkrementale Längenmeßeinrichtung gezeigt, die aus einem Maßstab 1a und aus einer Abtasteinheit 2 besteht, die jeweils in nicht dargestellter Weise mit zu messenden Objekten einer Bearbeitungsmaschine verbunden sind. Auf dem Maßstab 1a ist eine Teilung 3a in Form eines Strichgitters (Figur 2) aufgebracht, das im Auflicht photoelektrisch berührungsfrei von der Abtasteinheit 2 abgetastet wird. Entlang der Teilung 3a ist auf dem Maßstab 1a eine Reihe von äquidistanten Referenzmarken 4a vorgesehen, die jeweils aus Strichgruppen mit einer bestimmten Strichverteilung bestehen. Die durch die Abtastung der Teilung 3a erzeugten periodischen Abtastsignale,

2

die in der Abtasteinheit 2 verstärkt und in Rechtecksignale $T_1$, $T_2$ umgeformt werden, steuern über elektrische Leitungen 5, 6 einen elektronischen Zähler 7, der die Meßwerte in digitaler Form anzeigt. Die um ein Viertel der Gitterkonstanten der Teilung 3a zueinander phasenverschobenen Rechtecksignale $T_1$, $T_2$ dienen der Diskriminierung der Abtastrichtung. Das an den Referenzmarken 4a erzeugte Signal wird in der Abtasteinheit 2 verstärkt, in ein Rechtecksignal $S_B$ umgeformt und über eine Leitung 11 einer elektronischen Baueinheit 8 zugeführt.

Bei einem Ausführungsbeispiel der Erfindung ist entlang den Referenzmarken 4a gemäß Figur 2 eine Spur 14a aus einer magnetisierbaren Schicht vorgesehen, die einzelne Referenzmarken 4a zugeordnete magnetische Auswahlinformationen 9a enthält, die von einem Element 10 der Abtasteinheit 2 abgetastet werden, so daß die betreffenden Referenzmarken 4a ausgewählt und für den Meßvorgang zur Wirkung gebracht werden. Bei Annäherung der Abtasteinheit 2 an eine ausgewählte Referenzmarke 4a steuert die betreffende magne-tische Auswahlinformation 9a auf der Spur 14a das Element 10, beispielsweise in Form einer Feldplatte oder eines Hall -Elements, an, dessen Ausgangssignal $S_R$ auf einer Leitung 12 gleichfalls der elektronischen Baueinheit 8 zugeleitet wird. Nur, wenn die Signale $S_B$, $S_R$ auf den Leitungen 11, 12 gleichzeitig an den Eingängen der elektronischen Baueinheit 8 anliegen, wird auf deren Ausgangsleitung 13 ein Signal $S_B$' dem elektronischen Zähler 7 zugeführt, der dadurch zum Beispiel auf den Zahlenwert "Null" gesetzt wird.

Nach Figur 3 ist entlang den Referenzmarken 4b eine Spur 14b aus einer Folie mit magnetisierbaren Feldern 15 vorgesehen, die jeweils den einzelnen Referenzmarken 4b zugeordnet sind und magnetische Auswahlinformationen 9b enthalten, die vom Element 10 der Abtasteinheit 2 abgetastet werden, so daß die betreffenden Referenzmarken 4b ausgewählt und für den Meßvorgang zur Wirkung ,gebracht werden.

Bevorzugt werden die Auswahlinformationen 9a, 9b für ausgewählte Referenzmarken 4a, 4b mittels des Elements 10 der Abtasteinheit 2 auf der Spur 14a, 14 aufgezeichnet und die Auswahlinformationen 9a, 9b für nicht mehr benötigte Referenzmarken 4a, 4b auf der Spur 14a, 14b gelöscht. Das Element 10 weist zu diesem Zweck einen Magnetkopf auf, der aus einem Aufzeichnungselement, einem Löschelement und aus einem Leseelement besteht. Zur Aufzeichnung einer Auswahlinformation 9a, 9b bezüglich einer ausgewählten Referenzmarke 4a, 4b wird die Abtasteinheit 2 zu dieser Referenzmarke 4a, 4b verfahren, und beim Auftreten des Referenzimpulses in der Abtasteinheit 2 wird mittels des Aufzeichnungselements die Auswahlinformation 9a, 9b auf der Spur 14a, 14b aufgezeichnet; in gleicher Weise wird bei der Löschung einer nicht mehr benötigten Auswahlinformation 9a, 9b auf der Spur 14a, 14b mittels des Löschelements vorgegangen. Das Aufzeichnen und das Löschen von Auswahlinformationen 9a, 9b auf der Spur 14a, 14b kann somit programmgesteuert erfolgen, beispielsweise aufgrund des Bearbeitungsprogrammes einer Bearbeitungsmaschine, an der die Meßeinrichtung eingesetzt ist. Das Aufzeichnen und Löschen von Auswahlinformationen auf der Spur kann auch manuell auf beliebige Weise erfolgen.

Ferner kann der Maßstab 1 auch aus einem magnetisierbarem Material, insbesondere aus Stahl, bestehen. Die Auswahlinformationen können auf einer Spur auch kapazitiv aufgezeichnet sein.

Die Erfindung läßt sich sinngemäß auch bei absoluten Meßeinrichtungen (Codegebern) einsetzen, die Inkrementalspuren aufweisen.

Die Erfindung ist nicht auf lichtelektrische Meßeinrichtungen beschränkt, sondern auch bei magnetischen, induktiven und kapazitiven Meßeinrichtungen mit Erfolg anwendbar.

**Ansprüche**

1. Meßeinrichtung, insbesondere inkrementale Meßeinrichtung, mit entlang der Teilung (3a, 3b) eines Maßstabs (1a, 1b) vorgesehenen Referenzmarken (4a, 4b), die der Teilung (3a, 3b) fest zugeordnet sind und an denen im Zusammenwirken mit einer Abtasteinheit (2) reproduzierbare elektrische Impulse ($S_B$) erzeugt werden, die einen elektronischen Zähler (7) der Meßeinrichtung und/oder eine Steuereinrichtung beaufschlagen, und daß mit wenigstens einer den Referenzmarke (4a, 4b) zugeordneten Auswahlinformation (9a, 9b) die von wenigstens einem Element (10) der Abtasteinheit (2) abgetastet wird, so daß wenigstens eine Referenzmarke (4a, 4b) ausgewählt und zur Wirkung gebracht wird, dadurch gekennzeichnet, die Auswahlinformation (9a, 9b) elektromagnetisch entlang der Teilung (3a, 3b) des Maßstabs (1a, 1b) aufzeichenbar ist.

2. Meßeinrichtung nach Anspruch 1, dadurch gekennzeichnet, daß vom Element (10) der Abtasteinheit (2) die Auswahlinformation (9a, 9b) für eine ausgewählte Referenzmarke (4a, 4b) auf einer Spur (14a, 14b) auf zeichenbar und die Auswahlinformation (9a, 9b) für eine nicht mehr benötigte Referenzmarke (4a, 4b) auf der Spur (14a, 14b) löschbar ist.

3. Meßeinrichtung nach Anspruch 2, dadurch gekennzeichnet, daß die Spur (14b) aus einer Reihe von Feldern (15) besteht, die den einzelnen Referenzmarken (4b) zur Aufnahme der Auswahlinformation (9b) zugeordnet sind.

4. Meßeinrichtung nach Anspruch 2, dadurch gekennzeichnet, daß die Auswahlinformation (9a, 9b) auf der Spur (14a, 14b) magnetisch aufgezeichnet ist.

5. Meßeinrichtung nach Anspruch 4, dadurch gekennzeichnet, daß die Spur (14a) durch eine magnetisierbare Schicht gebildet ist.

6. Meßeinrichtung nach Anspruch 4, dadurch gekennzeichnet, daß die Spur (14b) durch eine magnetisierbare Folie gebildet ist.

7. Meßeinrichtung nach Anspruch 1, dadurch gekennzeichnet, daß der Maßstab (1a, 1b) aus magnetisierbarem Material, insbesondere aus Stahl, besteht.

8. Meßeinrichtung nach einem der Ansprüche 1 und 2, dadurch gekennzeichnet, daß das Element (10) der Abtasteinheit (2) einen Magnetkopf enthält, der ein Aufzeichnungselement, ein Löschelement und ein Leseelement aufweist.

9. Meßeinrichtung nach Anspruch 8, dadurch gekennzeichnet, daß das Leseelement aus einem Hall- Element oder einer Feldplatte besteht.

10. Meßeinrichtung nach Anspruch 2, dadurch gekennzeichnet, daß die Auswahlinformation (9a, 9b) auf der Spur (14a, 14b) kapazitiv aufgezeichnet ist.


**Claims**

1. Measuring device, especially an incremental measuring device, with reference marks (4a, 4b) provided along the graduation (3a, 3b) of a measuring scale (1a, 1b), which are fixedly associated with the graduation (3a, 3b) and from which reproducible electrical pulses (S$_B$) are generated in cojunction with a sensing unit (2), which act on an electronic counter (7) of the measuring device and/or a control device, and with at least a selection information (9a, 9b) associated with the reference marks (4a, 4b), which information is sensed by at least one element (10) of the sensing unit (2), so that at least one reference mark (4a, 4b) is selected and brought into action, characterized in that the selection information (9a, 9b) can be recorded and is readable electromagentically along the graduation (3a, 3b) of the measuring scale (1a, 1b).

2. Measuring device according to claim 1, characterized in that the selection information (9a, 9b) for a selected reference mark (4a, 4b) can be recorded on a track (14a, 14b) by the element (10) of the sensing unit (2) and the selection information (9a, 9b) for a no longer needed reference mark (4a, 4b) can be erased from the track (14a, 14b).

3. Measuring device according to claim 2, characterized in that the track (14b) consists of a series of fields (15). which are associated with the individual reference marks (14b) for receiving the selection information (9b).

4. Measuring device according to claim 2, characterized in that the selection information (9a, 9b) is magnetically recorded on the track (14a, 14b).

5. Measuring device according to claim 4, characterized in that the track (14) is formed by a magnetisable layer.

6. Measuring device according to claim 4, characterized in that the track (14b) is formed by a magnetisable foil.

7. Measuring device according to claim 1, characterized in that the measuring scale (1a, 1b) consists of magnetisable material, in particular steel.

8. Measuring device according to one of claims 1 and 2, characterized in that the element (10) of the sensing unit (2) includes a magnetic head, which comprises a recording element, an erasing element and a reading element.

9. Measuring device according to claim 8, characterized in that the reading element consists of a Hall element or a field plate.

10. Measuring device according to claim 2, characterized in that the selection information (9a, 9b) is recorded capacitively on the track (14a, 14b).


**Revendications**

1. Dispositif de mesure, notamment dispositif de mesure incrémental, comprenant des repères de référence (4a, 4b) prévus le long de la graduation (3a, 3b) d'une échelle de mesure (1a, 1b), qui sont associés de manière fixe à la graduation (3a, 3b) et sur lesquels sont générées, en coopération avec une unité de balayage (2), des impulsions électriques (S$_B$), reproductibles qui sont appliquées à un compteur (7) électronique du dispositif de mesure et/ou à un dispositif de commande, et au moins une information de sélection (9a, 9b), associée aux repères de référence, qui est balayée par au moins un élément (10) de l'unité de balayage (2), de sorte qu'au moins un repères de référence (4a, 4b) soit sélectionné et entre en action, caractérisé par le fait que l'information de sélection (9a, 9b) peut être inscrite de façon électromagnétique le long de la graduation (3a, 3b) de l'échelle de mesure (1a, 1b).

2. Dispositif de mesure selon la revendication 1, caractérisé par le fait que l'information de sélection (9a, 9b) pour un repère de référence (4a, 4b) sélectionné peut être inscrite par l'élément (10) de l'unité de balayage (2) sur une piste (14a, 14b) et l'information de sélection (9a, 9b) pour un repère de référence (4a, 4b) dont on n'a plus besoin peut être effacée sur la piste (14a, 14b).

4

3. Dispositif de mesure selon la revendication 2, caractérisé par le fait que la piste (14b) se compose d'une série de champs (15) qui sont associés aux repères de référence (4b) individuels en vue de la réception d'informations de sélection (9b).

4. Dispositif de mesure selon la revendication 2, caractérisé par le fait que l'information de sélection (9a, 9b) est inscrite de façon magnétique sur la piste (14a, 14b).

5. Dispositif de mesure selon la revendication 4, caractérisé par le fait que la piste (14a) est constituée par une couche magnétisable.

6. Dispositif de mesure selon la revendication 4, caractérisé par le fait que la piste (14b) est constituée par une feuille magnétisable.

7. Dispositif de mesure selon la revendication 1, caractérisé par le fait que l'échelle de mesure (1a, 1b) est en matière magnétisable, notamment en acier.

8. Dispositif de mesure selon l'une des revendicationscations 1 et 2, caractérisé par le fait que l'élément (10) de l'unité de balayage (2) possède une tête magnétique qui présente un élément d'inscription, un élément d'effacement et un élément de lecture.

9. Dispositif de mesure selon la revendication 8, caractérisé par le fait que l'élément de lecture est constitué par un élément à effet Hall ou une magnétorésistance.

10. Dispositif de mesure selon la revendication 2, caractérisé par le fait que l'information de sélection (9a, 9b) est inscrite de façon capacitive sur la piste (14a, 14b).

FIG.1

FIG.2

FIG.3